# EUROPÄISCHE PATENTSCHRIFT

(11) **EP 2 681 466 B1**
(45) Veröffentlichungstag und Bekanntmachung des Hinweises auf die Patenterteilung: **20.07.2016**
(21) Anmeldenummer: 12708658.5
(22) Anmeldetag: 25.01.2012
(51) Int. Cl.: F16H 57/027

(54) **ANTRIEB MIT EINEM AUSGLEICHSELEMENT UND VERFAHREN ZUM HERSTELLEN EINES DERARTIGEN ANTRIEBS**
DRIVE COMPRISING A COMPENSATION ELEMENT AND METHOD FOR PRODUCING SUCH A DRIVE
ENTRAÎNEMENT COMPRENANT UN ÉLÉMENT DE COMPENSATION ET PROCÉDÉ DE FABRICATION D'UN TEL ENTRAÎNEMENT

(30) Priorität: 28.02.2011 DE 102011012630
(43) Veröffentlichungstag der Anmeldung: 08.01.2014
(73) Patentinhaber: Sew-Eurodrive GmbH & Co. KG, 76646 Bruchsal (DE)
(72) Erfinder: KERSCHBAUM, Martin, 76139 Karlsruhe (DE)
(86) Internationale Anmeldenummer: PCT/EP2012/000325
(87) Internationale Veröffentlichungsnummer: WO 2012/116771

(56) Entgegenhaltungen:
- WO-A2-99/48614
- DE-A1- 2 140 795
- DE-A1-102008 046 446
- FR-A1- 2 881 679
- US-A- 3 939 887
- US-A- 5 522 769
- US-B1- 6 942 097

## Beschreibung

Die Erfindung betrifft einen Antrieb und ein Verfahren zum Herstellen eines Antriebs.

Es ist bekannt, Kunststoffteile mittels Kunststoffspritzgusstechnik herzustellen, wobei ein Werkzeug eingesetzt wird, das die gewünschte Form des Werkstücks erzeugt.

Aus der US 5 522 769 A ist ein gasdurchlässiger Verschlussstoppfen bekannt, wobei der Luftdruckausgleich zwischen innerem und äußerem Raumbereich mittels Luftdurchlass erfolgt.

Die DE 102008 046 446 A1 zeigt einen Antrieb mit den Merkmalen des Oberbegriffs von Anspruch 1.

Der Erfindung liegt daher die Aufgabe zugrunde, ein kostengünstig herstellbares Ausgleichselement herstellbar zu machen und einzusetzen.

Erfindungsgemäß wird die Aufgabe bei dem Antrieb nach den in Anspruch 1 und bei dem Verfahren zum Herstellen eines Antriebs mit Ausgleichselement nach den in Anspruch 14 angegebenen Merkmalen gelöst.

Wichtige Merkmale der Erfindung bei dem Ausgleichselement, insbesondere elastisch verformbares Ausgleichselement, sind, dass
das Ausgleichselement einen Grundkörper aufweist, mit dem ein Deckelteil einstückig ausgeformt ist,
wobei das Deckelteil in einen Aufnahmebereich des Grundkörpers einpressbar und/oder kraftschlüssig verbindbar.

Von Vorteil ist dabei, dass das Deckelteil verliersicher verbunden ist mit dem Grundkörper. Außerdem ist das Deckelteil zur Verstärkung von Bereichen mit dünner Wandstärke verwendbar. Darüber hinaus ist das Deckelteil einfach verbindbar durch Einpressen. Somit ist ein vom Grundkörper umfasster Hohlraum verschließbar mit dem Deckelteil.

Bei einer vorteilhaften Ausgestaltung ist in Verbindungssteg zwischen Deckelteil und Grundkörper angeordnet. Von Vorteil ist dabei, dass eine Verliersicherung in einfacher Weise herstellbar ist. Außerdem ist im Lager keine zum Grundkörper separate Verwaltung der Deckelteile notwendig. Des Weiteren ist eine einfache Kunststoffspritzgussfertigung ausführbar.

Bei einer vorteilhafter Ausgestaltung umschleißt der Grundkörper einen Hohlraum, welcher zu einem axialen Endbereich des Grundkörpers hin zur Umgebung hin geöffnet ausgeführt ist. Von Vorteil ist dabei, dass die Wandung des Grundkörpers den Raumbereich des Motors vom Raumbereich des schmierstoffbefüllten Getriebes trennt.

Erfindungsgemäß sind an einem axialen Endbereich des Grundkörpers zumindest eine Dichtlippe, insbesondere zwei Dichtlippen, ausgeformt,
wobei das Deckelteil im axialen Endbereich, insbesondere an einer dortigen Innenwandung, einpressbar ist. Von Vorteil ist dabei, dass der Bereich verstärkbar ist durch das Deckelteil und somit die Dichtlippen mit einer vorgebbaren Anpresskraft an die Innenwandung angepresst werden.

Bei einer vorteilhaften Ausgestaltung weist das Deckelteil einen Durchlass auf, insbesondere einen mittig angeordneten Durchlass. Von Vorteil ist dabei, dass der Luftdruckausgleich zwischen der Luft im Hohlraum des Ausgleichselements und dem restlichen Raumberiech des Elektromotors in einfacher Weise mit vernachlässigbarem Strömungswiderstand ausführbar ist.

Bei einer vorteilhaften Ausgestaltung ist mittels des Deckelteils die Öffnung, insbesondere die zur Umgebung hin gerichtete Öffnung, verschließbar durch das Deckelteil,

insbesondere indem dieses Deckelteil eingepresst wird in den axialen Endbereich, in welchem die Dichtlippe beziehungsweise die Dichtlippen angeordnet sind. Von Vorteil ist dabei, dass einen Verstärkung der Wandung ermöglicht ist, ohne den Luftdruckausgleich zu verschlechtern.

Bei einer vorteilhaften Ausgestaltung weist die Dichtlippe an ihrem Außenrand einen Wulst auf oder mit einer verstärkten Wandung ausgeführt ist, so dass nach Einpressen in den axialen Endbereich des Grundkörpers eine Stabilisierung des Grundkörpers in diesem Bereich, insbesondere im von den Dichtlippen axial überdeckten Bereich, erreicht ist. Von Vorteil ist dabei, dass die Dichtlippen auf einem vorgegebenen Radialabstand gehalten werden und somit mit einer entsprechend abhängigen Anpresskraft an der Dichtfläche, insbesondere beispielsweise an der Innenwandung der Ausnehmung des zentralen Gehäuseteils angedrückt werden.

Bei einer vorteilhaften Ausgestaltung ist das Ausgleichselement einstückig ausgeformt und/oder im Kunststoffspritzgussverfahren hergestellt. Von Vorteil ist dabei, dass eine einfache Herstellung ermöglicht ist.

Bei einer nicht erfindungsgemäßen Ausgestaltung weist das Ausgleichselement eine Ausnehmung auf, in der ein rotationssymmetrischer Bereich ausgeformt ist, dessen Radialabstand in axialer Richtung zyklisch oder periodisch veränderlich ist, insbesondere in einem axialen Teilabschnitt des Grundkörpers, insbesondere mit konstanter Wandstärke. Von Vorteil ist dabei, dass das Ausgleichselement als Faltenbalg ausformbar ist und somit elastisch verformbar ist vom Druckunterschied zwischen dem inneren und äußeren Raumbereich.

Erfindungsgemäß weist das Ausgleichselement, insbesondere das elastisch verformbare Ausgleichselement, jedoch eine Ausnehmung auf, in der ein schraubenartiger Innenverzahnbereich ausgeformt ist.

Von Vorteil ist dabei, dass das Werkzeug in einfacher Weise, nämlich durch Schraubbewegung entfernbar ist. Dies gilt hauptsächlich für den Werkzeugkern, also denjenigen Teil des Werkzeugs, welcher die Ausnehmung im Ausgleichselement erzeugt. Nach dem Einspritzen des Kunststoffs ins Werkzeug, insbesondere in den Zwischenraum zwischen den Werkzeugkern und die äußeren Formteile des Werkzeugs wird der Werkzeugkern herausgeschraubt aus dem Werkstück. Somit ist eine einfache und somit kostengünstige Herstellung gewährleistbar.

Bei einer vorteilhaften Ausgestaltung ist das Ausgleichselement einstückig ausgeformt und/oder im Kunststoffspritzgussverfahren hergestellt. Von Vorteil ist dabei, dass eine einfache Herstellung des Ausgleichselements ausführbar ist.

Bei einer vorteilhaften Ausgestaltung weist das Ausgleichselement an seiner Außenseite einen schraubenartigen Außenverzahnbereich auf. Von Vorteil ist dabei, dass die Wandstärke im Wesentlichen gleich ist im Bereich der Verzahnung, wodurch eine gleichmäßige Verformbarkeit in axialer Richtung erreichbar ist, also einem Faltenbalg entsprechend in Richtung der Zylinderachse des Faltenbalgs. Die Achsrichtung ist dabei Normalenrichtung zum Topfboden des Ausgleichselements.

Bei einer vorteilhaften Ausgestaltung ist die Außenverzahnung derart auf die Innenverzahnung abgestimmt und angeordnet, insbesondere weist dieselbe Schraubenachse und Ganghöhe auf, dass die Wandstärke des Ausgleichselements im Verzahnungsbereich im Wesentlichen konstant ist, insbesondere also um weniger als den 50% variiert. Von Vorteil ist dabei, dass die elastische Verformbarkeit gleichmäßig ist und somit abhängig vom Luftdruckunterschied eine entsprechend ungefähr proportionale Luftmenge aus dem Ausgleichselement herausgedrängt wird.

Bei einer vorteilhaften Ausgestaltung sind an einem ersten axialen Endbereich des Ausgleichselements zumindest eine Dichtlippe, insbesondere zwei oder mehr voneinander beabstandete, zueinander parallel ausgerichtete Dichtlippen, ausgeformt,

insbesondere wobei die Dichtlippen axial außerhalb der Verzahnbereiche angeordnet sind und/oder im axial letzten Schraubverzahnungsgang angeordnet sind. Von Vorteil ist dabei, dass eine dichte Verbindung in einfacher Weise erzeugbar ist.

Bei einer vorteilhaften Ausgestaltung ist die Ausnehmung sacklochartig ausgeführt, insbesondere wobei das Ausgleichselement topfartig ausgeführt ist, so dass der Topfboden als Rückwand einstückig mit der Topfwandung ausgeformt ist. Von Vorteil ist dabei, dass eine hohe Dichtheit herstellbar ist, weil das Ausgleichselement einstückig herstellbar ist samt Topfform, Dichtlippen und Topfboden-Rückwand.

Bei einer vorteilhaften Ausgestaltung ist die Ausnehmung an ihrem ersten axialen Endbereich offen und an ihrem anderen axialen Endbereich von einer am Ausgleichselement ausgeformten Rückwand, insbesondere Stirnfläche, begrenzt. Von Vorteil ist dabei, dass das umschlossene Luftvolumen herausdrängbar ist.

Bei einer vorteilhaften Ausgestaltung ist der Kunststoff ein chemisch inerter Stoff, insbesondere ein zum Schmierstoff, wie Schmieröl, chemisch inerter Stoff, wie beispielsweise NBR oder HNBR. Von Vorteil ist dabei, dass eine einfache Herstellung in kostengünstiger Weise ermöglicht ist mit einem insbesondere zu Schmieröl chemisch inertem Stoff.

Wichtige Merkmale bei dem Verfahren zum Herstellen eines Ausgleichselements sind, dass das Ausgleichselement im Kunststoffspritzgussverfahren hergestellt wird,
wobei zum Entfernen des Werkzeugs beim Kunststoffspritzgießverfahren ein schraubverzahnter Werkzeugkern aus dem Ausgleichselement herausgeschraubt wird,
insbesondere wobei beim Entfernen durch einen im Werkzeugkern angeordneten Kanal Druckluft zwischen Werkzeugkern und Ausgleichselement eingeblasen wird.

Von Vorteil ist dabei, dass ein besonders einfaches und schnelles Entfernen des Werkzeugkerns ermöglicht ist. Somit ist eine kostengünstige Fertigung eines faltbaren Ausgleichselements, insbesondere wobei die Faltung in Längsrichtung ermöglicht ist.

Wichtige Merkmale bei dem Antrieb mit einem zentralen Gehäuseteil sind, dass in einer Ausnehmung des zentralen Gehäuseteils ein Ausgleichselement angeordnet ist,
wobei das Ausgleichselement eine Ausnehmung aufweist, in der ein schraubenartiger Innenverzahnbereich ausgeformt ist,
insbesondere wobei die Ausnehmung des zentralen Gehäuseteils topfartig ausgeführt ist, wobei im Topfboden ein Durchlass durch das zentrale Gehäuseteil angeordnet ist.

Von Vorteil ist dabei, dass das Werkzeug nach Herstellung des Ausgleichselements herausschraubbar ist und dieses Ausgleichselement in einem zentralen Gehäuseteil, welches den Raumbereich des schmierstoffbefüllten Getriebes vom Raumbereich des luftbefüllten Elektromotors trennt, einsetzbar ist. Somit nimmt das zentrale Gehäuseteil nicht nur die Lager der Wellen auf und spreizt die Wärme vom Getriebe und/oder Motor auf sondern nimmt auch das Ausgleichselement auf, wobei es für das druckunterschiedsabhängig längenveränderliche Ausgleichselement als Führung beim Ausdehnen und Zusammenziehen fungiert.

Bei einer vorteilhaften Ausgestaltung weist der Antrieb einen Elektromotor und ein Getriebe auf, wobei ein Lager der Abtriebswelle und ein Lager der Rotorwelle jeweils im zentralen Gehäuseteil aufgenommen sind. Von Vorteil ist dabei, dass die mechanischen Kräfte ins zentrale Gehäuseteil ableitbar sind und die Wärme des Motors und Getriebes ebenfalls dorthin ableitbar und aufspreizbar ist.

Bei einer vorteilhaften Ausgestaltung ist das Ausgleichselement zum Druckausgleich zwischen dem Raumbereich des Getriebes und dem Raumbereich des Motors angeordnet, insbesondere wobei die Innenwandung der Ausnehmung des Ausgleichselements den Raumbereich des Motors zumindest teilweise begrenzt und die äußere Oberfläche des Ausgleichselements zumindest teilweise den Raumbereich des Getriebes begrenzt. Von Vorteil ist dabei, dass ein Druckausgleich für den Getriebeinnenraum ermöglicht ist, so dass die die Wellen des Getriebes nach außen abdichtenden Wellendichtringe des Getriebes keinen unzulässig hohen Überdruck aufnehmen müssen und daher geschützt sind und eine hohe Standzeit erreichen.

Bei einer vorteilhaften Ausgestaltung ist das Getriebe zumindest teilweise mit Schmierstoff, insbesondere Öl, befüllt. Von Vorteil ist dabei, dass der Getriebebereich vom Motorbereich abdichtbar ist mittels des Ausgleichselements, wobei Druckunterschiede ausgleichbar sind durch Volumenänderung des Ausgleichselements, insbesondere also mittels des in Längsrichtung vom Druckunterschied bewirkten Zusammenfaltens.

Bei einer vorteilhaften Ausgestaltung ist der Raumbereich des Motors zum Luftaustausch über eine semipermeable Membran mit der Umgebungsluft des Antriebs verbunden. Von Vorteil ist dabei, dass kein Druckunterschied zur Umgebungsluft aufgebaut wird und somit der Motorbereich denselben Luftdruck wie die Umgebung aufweist. Somit ist der vom Ausgleichselement ausgeglichene Druckunterschied optimal für eine Entlastung des Ausgleichselement, insbesondere also Faltenbalgs.

Bei einer vorteilhaften Ausgestaltung ist das Ausgleichselement kraftschlüssig verbunden, insbesondere eingepresst, in die das Ausgleichselement aufnehmende Ausnehmung des zentralen Gehäuseteils. Von Vorteil ist dabei, dass die abgedichtete Verbindung durch einfaches Einpressen des elastischen Ausgleichselements in die im Wesentlichen unelastische Ausnehmungswandung im zentralen Gehäuseteil herstellbar ist. Vorzugsweise ist das zentrale Gehäuseteil aus Stahl hergestellt.

Bei einer vorteilhaften Ausgestaltung berühren, insbesondere und abdichten, am Ausgleichselement einstückig ausgebildete Dichtlippen die Wandung der Ausnehmung des zentralen Gehäuseteils. Von Vorteil ist dabei, dass die Dichtlippen einstückig ausgeformt sind am Ausgleichselement die Wandung im axialen Beriech der Dichtlippen einen größeren Innendurchmesser aufweist also der Außendurchmesser des schraubverzahnten Werkzeugkerns, so dass dieser herausschraubbar ist aus dem Ausgleichselement, ohne die Dichtungen zu zerstören.

Die Erfindung wird nun anhand von schematischen Abbildungen näher erläutert:

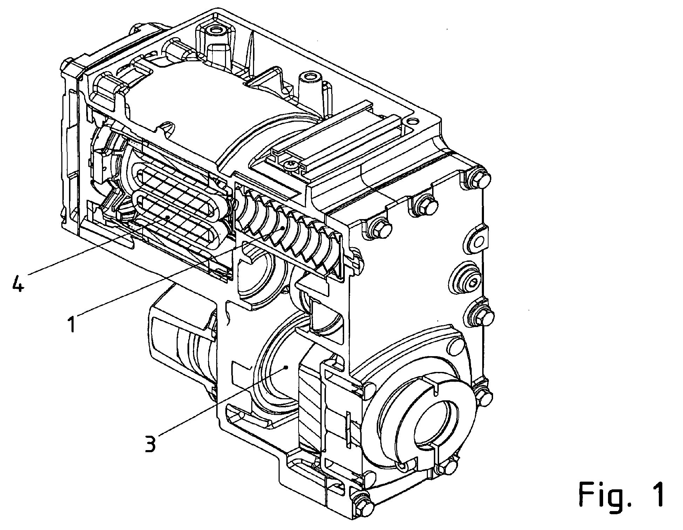

In der Figur 1 ist eine seitlich angeschnittene Schrägansicht eines Antriebs gezeigt, wobei ein Deckelteil entfernt ist und im angeschnittenen Bereich die Statorwicklung 4 sichtbar ist.

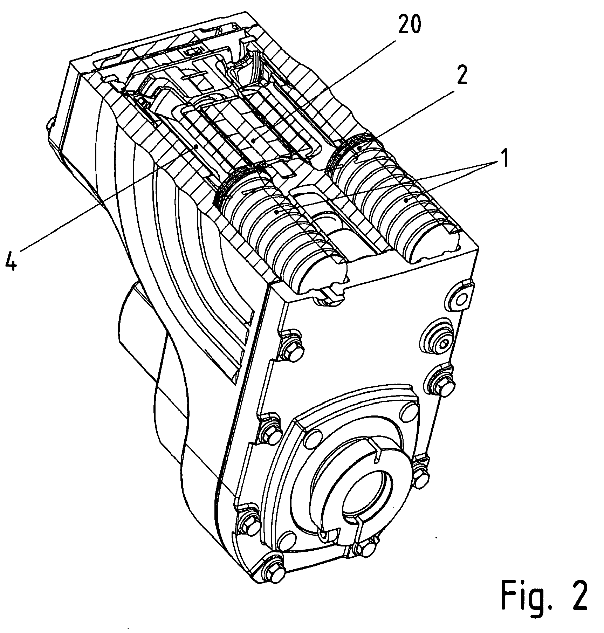

In der Figur 2 ist eine Schrägansicht des Antriebs gezeigt, wobei die Oberseite angeschnitten dargestellt ist.

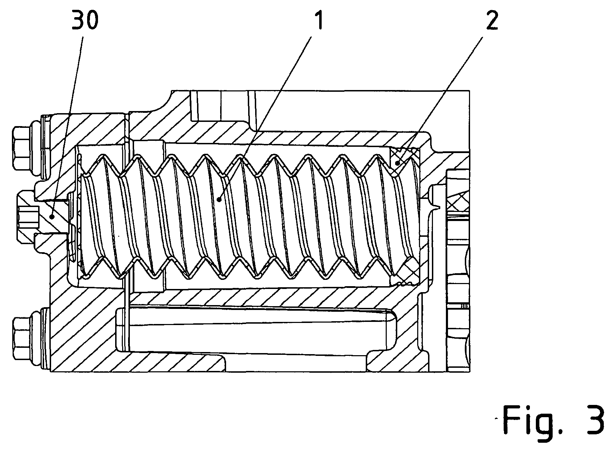

In der Figur 3 ist der Hohlraum im Gehäuseteil, insbesondere zentralen Gehäuseteil, des Antriebs näher gezeigt, wobei der Hohlraum das Ausgleichselement 1 aufnimmt.

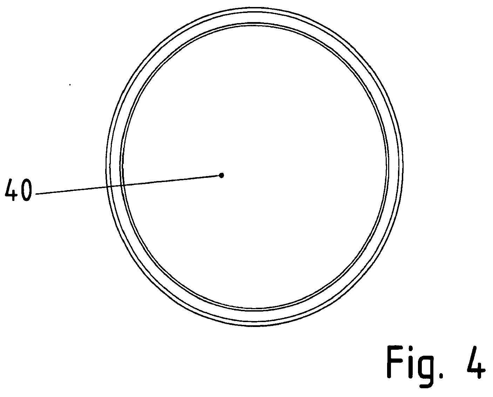

In der Figur 4 ist eine Rückansicht des Ausgleichselement 1 gezeigt.

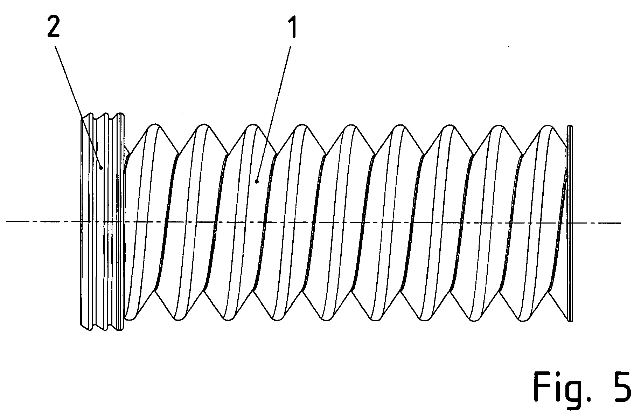

In der Figur 5 ist eine Seitenansicht des Ausgleichselements 1 gezeigt.

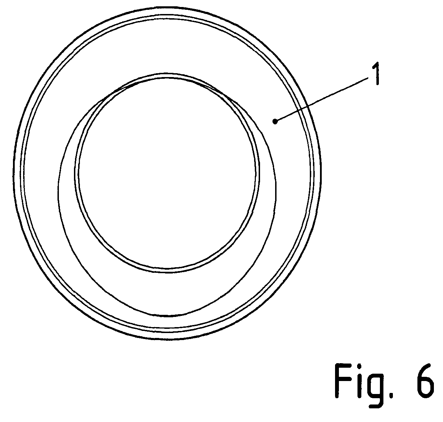

In der Figur 6 ist eine Vorderansicht des Ausgleichselement 1 gezeigt.

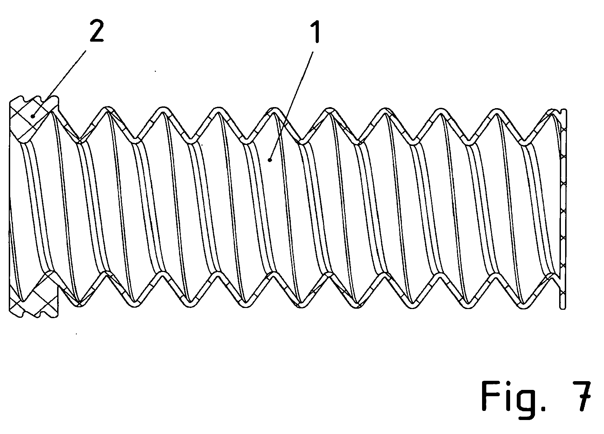

In der Figur 7 ist eine Schnittansicht des Ausgleichselement 1 gezeigt.
In der Figur 8 ist ein weiteres Ausgleichselement 1 gezeigt, wobei das Deckelteil 80 vor der Montage heruntergeklappt ist und in diesem Zustand dargestellt ist.
In der Figur 9 ist ein zu Figur 8 zugehöriger Querschnitt gezeigt.
In der Figur 10 ist das Ausgleichselement 1 mit aufgesetztem Deckelteil 1 gezeigt.
In der Figur 11 ist ein zur Figur 10 zugehöriger Querschnitt gezeigt.

Der Antrieb weist ein zentrales Gehäuseteil auf, in welchem ein Lager der Abtriebswelle eines von einem Elektromotor angetriebenen Getriebes aufgenommen ist. Außerdem ist ein Lager der Rotorwelle 20 des Elektromotors im zentralen Gehäuseteil aufgenommen.

Abtriebswelle 3 und Rotorwelle 20 sind parallel angeordnet.

Auf das zentrale Gehäuseteil ist ein in den Figuren nicht gezeigtes Deckelteil aufgesetzt, in welchem eine elektronische Schaltung angeordnet ist, die Umrichterfunktionalität umfasst und den Elektromotor speist.

In einer Ausnehmung des Deckelteils ist ein Entlüftungskanal mit Verschlusselement angeordnet, welches eine semipermeable Membran aufweist, so dass ein Ausgleich des Luftdrucks durch die Membran hindurch erfolgt. Die Membran ist also luftdurchlässig. Dabei weist die semipermeable Membran Wasser und/oder Wasserdampf ab. Vorzugsweise ist sie lipophob ausgeführt.

Die Raumbereiche des Elektromotors und der Elektronik sind luftdurchlässig verbunden. Das Getriebe ist mit Schmierstoff, insbesondere Öl, zumindest teilweise befüllt und zum Raumbereich des Motors hin schmierstoffdicht abgedichtet. Außerdem ist das Getriebe gegen die Umgebung abgedichtet.

Zum thermisch bedingten Druckausgleich sind zwei Ausgleichselemente 1 in hohlen Ausnehmungen des zentralen Gehäuseteils vorgesehen. Wenn nämlich je nach Drehmoment, Drehzahl und Umgebungstemperatur das im Getriebe sich befindende Öl und/oder die im Getriebe sich befindende Luft ausdehnt, werden die Ausgleichselemente 1 komprimiert.

Vorzugsweise sind die Ausgleichselemente balgartig ausgeführt.

Der das jeweilige Ausgleichselement 1 aufnehmende Hohlraum ist zylindrisch ausgeformt und weist an seiner Bodenwandung einen luftdurchlässigen Durchlass zum Raumberiech des Elektromotors auf.

Das Ausgleichselement 1 ist aus einem elastischen Material, wie Kunststoff, einstückig gefertigt. Vorzugsweise ist das Ausgleichselement 1 als Kunststoffspritzgussteil gefertigt.

Dabei weist das Ausgleichselement 1 eine schraubenförmige Geometrie auf. Die Dichtlippen 2 sind ringartig ausgeformt und im axialen Endbereich des Ausgleichselement 1 angeordnet, wobei die beiden Dichtlippen 2 axial einen Abstand aufweisen. In diesem axialen Endbereich weist das Ausgleichselement 1 eine Öffnung auf. Am anderen axialen Endbereich weist das Ausgleichselement 1 eine Rückwand 40 auf.

Das Ausgleichselement 1 ist eingepresst in die zylindrische Ausnehmung im zentralen Gehäuseteil. Dabei sind die Dichtlippen 2 angedrückt an die Innenwandung der Ausnehmung und somit derart elastisch verformt, dass eine kraftschlüssige Verbindung zwischen Dichtlippen 2 und zentralem Gehäuseteil vorhanden ist. Somit ist die Verbindung abdichtend wirksam.

Das Schraubteil ist von einem mehrteiligen Werkzeug mittels Kunststoffspritzgießverfahren herstellbar, das einen schraubverzahnten Werkzeugkern aufweist und zwei oder mehr Außenformteile. Dabei erzeugt der schraubverzahnte Werkzeugkern eine entsprechend schraubverzahnte Innenwandung des Ausgleichselements 1. Die Außenformteile umgeben das Ausgleichselement während des Einspritzens des Kunststoffs in den Zwischenraum zwischen den Außenformteilen und dem Werkzeugkern. Zum Entfernen des Werkzeugs werden die Außenformteile weggeklappt, was ohne Aufwand ermöglicht ist, das mindestens zwei Außenformteile vorhanden sind und jedes davon nur einen Teil der äußeren Oberfläche des Ausgleichselements 1 abdeckt.

Zum Entfernen des Werkzeugkerns aus dem Ausgleichelement 1 wird mittels Schraubbewegung, also Drehbewegung um die Schraubenachse herum mit überlagerter gleichförmiger in Richtung der Schraubenachse translatorischer Verschiebung, der Werkzeugkern herausgeschraubt. Alternativ ist auch das Ausgleichselement 1 herausschraubbar.

Vorzugswiese formen die Außenformteile ebenfalls eine Schraubenverzahnung ins Ausgleichselement ein, so dass ein Faltenbalg mit schraubenförmiger Geometrie entsteht. Die Wandstärke des Ausgleichselements ist also im Wesentlichen konstant, wodurch eine hohe elastische Verformbarkeit gewährleistet wird.

Die Dichtlippen werden als Verdickungen im axialen Endbereich, insbesondere Mündungsbereich, des Ausgleichselement einstückig mit ausgeformt.

Der Verschlussstopfen 30 ermöglicht eine Ölbefüllung des Getriebes und ist auf der von der Mündung des Ausgleichselements 1 abgewandten Seite des Ausgleichselements 1 angeordnet.

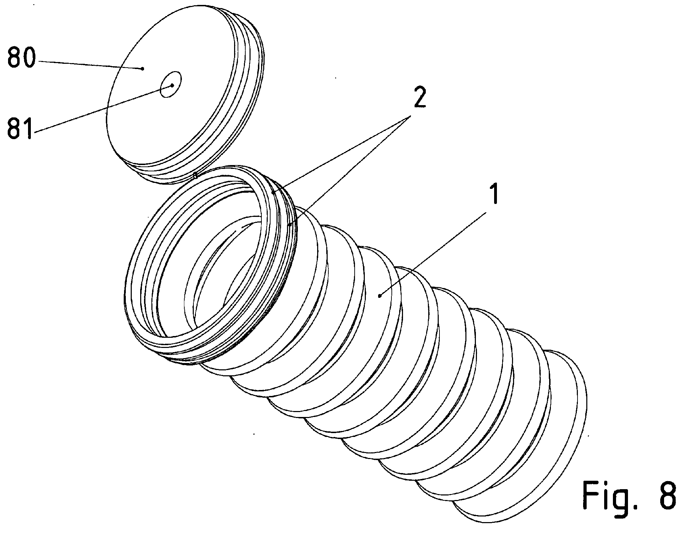

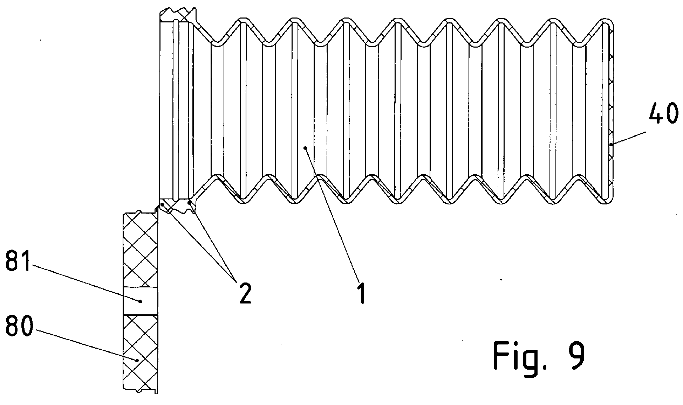

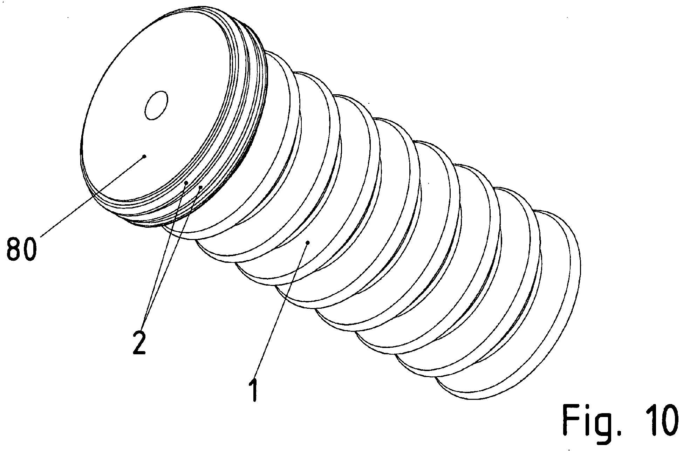

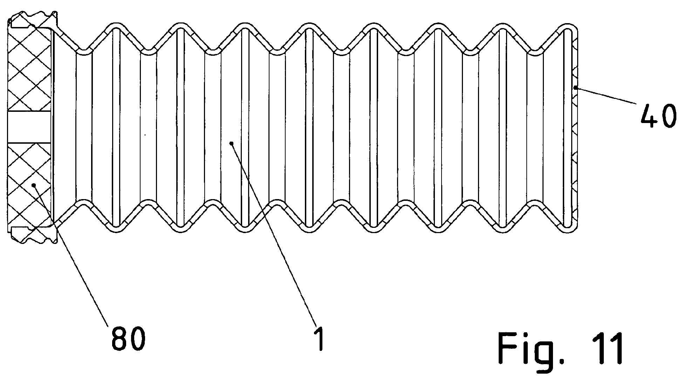

In den Figuren 8 bis 11 ist ein anderes Ausgleichselement 1 gezeigt, das ebenfalls in die Ausnehmung des zentralen Gehäuseteils einsetzbar ist.

Vor der Montage in den Antrieb, also nach dem Herstellen im Kunststoffspritzgussverfahren, weist das Ausgleichselement 1 ein Deckelteil 80 auf, welches einen Durchlass 81 zum Hindurchströmen von Luft aufweist.

Dieses Deckelteil 80 ist über einen dünnen kurzen Steg noch verbunden mit dem topfförmigen Grundkörper des Ausgleichselements 1. Die Verbindung ist im von der Rückwand 40 abgewandten axialen Endbereich angeordnet, also nahe zu den Dichtlippen 2, die ebenfalls in diesem Bereich ausgeformt sind. Die sich im axial anschließenden axialen Bereich des Ausgleichselements 1 anschließende Wandung des Grundkörpers ist anstatt der erfindungsgemäßen Schraubverzahnung hierbei mit konzentrischen Ringen ausgestattet. Der Grundkörper gleicht also einem Faltenbalg, der in seinem anderen axialen Endbereich mittels der Rückwand 40 verschlossen ist. Die Wandungsstärke, also Wanddicke, des Grundkörpers axial zwischen dem Bereich der Dichtungen 2 und der Rückwand 40 ist im Wesentlichen konstant.

Diese Ausführung des Ausgleichselements ermöglicht ein einfaches Entfernen des Werkzeugkerns in axialer Richtung, wobei auch Luft zwischen den Werkzeugkern und die Innenwandung des Ausgleichselements 1 einblasbar ist, um ein noch einfacheres Entfernen des Werkzeugkerns zu ermöglichen.

Zur Verstärkung der dünnen Wandung im axialen Endbereich des Ausgleichselements, insbesondere im axialen Bereich der Dichtlippen 2, ist nach dem Entfernen des Werkzeugkerns das Deckelteil 80 einklappbar, so dass das Deckelteil 80 kraftschlüssig verbunden ist an der Innenseite des Ausgleichselements 1 in diesem axialen Beriech und somit eine mechanische erhöhte Stabilität erreicht ist.

Das auf diese Weise verstärkte Ausgleichselement 1 ist sodann mit seinen von innen stabilisierten Dichtlippen 2 in die Ausnehmung des zentralen Gehäuseteils einpressbar und somit dicht verbindbar.

Vorteiligerweise ist das Deckelteil 80 schon bei der Herstellung einstückig verbunden mit dem Grundkörper des Ausgleichselements. Auf diese Weise ist im Lager, also vor Einbau in den Antrieb, das Deckelteil 80 verliersicher aufbewahrt.

Erfindungsgemäß ist eine Schraubverzahnung anstatt der konzentrischen Ringstruktur aus geformt.

In einem weiteren erfindungsgemäßen Ausführungsbeispiel weist das Getriebe eine Winkelgetriebestufe auf, so dass Abtriebswelle 3 und Rotorwelle 20 senkrecht zueinander angeordnet sind.

In einem weiteren erfindungsgemäßen Ausführungsbeispiel ist das Ausgleichselement 1 aus einem NBR gefertigt.

### Bezugszeichenliste

1 Ausgleichselement
2 Dichtlippen
3 Abtriebswelle des Getriebes
4 Statorwicklung des Motors
20 Rotorwelle
30 Verschlussschraube
40 Rückwand
80 Deckelteil
81 Durchlass

## Patentansprüche

1. Antrieb mit einem zentralen Gehäuseteil,
wobei in einer Ausnehmung des zentralen Gehäuseteils ein Ausgleichselement (1) angeordnet ist,
wobei das Ausgleichselement (1) eine Ausnehmung aufweist,
wobei die Ausnehmung des zentralen Gehäuseteils topfartig ausgeführt ist, wobei im Topfboden ein Durchlass (81) durch das zentrale Gehäuseteil angeordnet ist,
wobei der Antrieb einen Elektromotor und ein Getriebe aufweist, wobei ein Lager einer Abtriebswelle (3) und ein Lager einer Rotorwelle (20) jeweils im zentralen Gehäuseteil aufgenommen sind,
und wobei das Ausgleichselement (1) zum Druckausgleich zwischen dem Raumbereich des Getriebes und dem Raumbereich des Motors angeordnet ist, wobei die Innenwandung der Ausnehmung des Ausgleichselements (1) den Raumbereich des Motors zumindest teilweise begrenzt und die äußere Oberfläche des Ausgleichselements (1) zumindest teilweise den Raumbereich des Getriebes begrenzt,
**dadurch gekennzeichnet, dass** in der Ausnehmung des Ausgleichselements (1) ein schraubenartiger Innenverzahnbereich ausgeformt ist,
wobei das Ausgleichselement (1), insbesondere elastisch verformbares Ausgleichselement (1), einen Grundkörper aufweist, mit dem ein Deckelteil (80) einstückig ausgeformt ist,
wobei das Deckelteil (80) in einen Aufnahmebereich des Grundkörpers einpressbar und/oder kraftschlüssig verbindbar ist,
wobei an einem axialen Endbereich des Grundkörpers zumindest eine Dichtlippe ausgeformt ist, insbesondere zwei Dichtlippen (2) ausgeformt sind, und
wobei das Deckelteil im axialen Endbereich, insbesondere an der dortigen Innenwandung, einpressbar ist.

2. Antrieb nach Anspruch 1,
**dadurch gekennzeichnet, dass**
ein Verbindungssteg zwischen Deckelteil (80) und Grundkörper angeordnet ist.

3. Antrieb nach mindestens einem der vorangegangenen Ansprüche,
**dadurch gekennzeichnet, dass**
das Deckelteil (80) einen Durchlass (81) aufweist, insbesondere einen mittig angeordneten Durchlass (81).

4. Antrieb nach mindestens einem der vorangegangenen Ansprüche,
**dadurch gekennzeichnet, dass**
mittels des Deckelteils (80) eine Öffnung, insbesondere eine zur Umgebung hin gerichtete Öffnung, verschließbar ist.

5. Antrieb nach mindestens einem der vorangegangenen Ansprüche,
**dadurch gekennzeichnet, dass**
die Dichtlippe an ihrem Außenrand einen Wulst aufweist oder mit einer verstärkten Wandung ausgeführt ist, so dass nach Einpressen in den axialen Endbereich des Grundkörpers eine Stabilisierung des Grundkörpers in diesem Bereich, insbesondere im von den Dichtlippen (2) axial überdeckten Bereich, erreichbar ist.

6. Antrieb nach mindestens einem der vorangegangenen Ansprüche,
**dadurch gekennzeichnet, dass**
das Ausgleichselement (1) einstückig ausgeformt und/oder im Kunststoffspritzgussverfahren hergestellt ist.

7. Antrieb nach mindestens einem der vorangegangenen Ansprüche,
**dadurch gekennzeichnet, dass**
der schraubenartige Innenverzahnbereich ausgeformt ist in einem axialen Teilabschnitt des Grundkörpers, insbesondere mit konstanter Wandstärke.

8. Antrieb nach mindestens einem der vorangegangenen Ansprüche,
**dadurch gekennzeichnet, dass**
das Ausgleichselement (1) an seiner Außenseite einen schraubenartigen Außenverzahnbereich aufweist,
und/oder dass
die Außenverzahnung derart auf die Innenverzahnung abgestimmt und angeordnet ist, insbesondere dieselbe Schraubenachse und Ganghöhe aufweist, dass die Wandstärke des Ausgleichselements (1) im Verzahnungsbereich im Wesentlichen konstant ist, insbesondere also um weniger als den 50% variiert,
und/oder dass
die Dichtlippen (2) axial außerhalb der Verzahnbereiche angeordnet sind und/oder im axial letzten Schraubverzahnungsgang angeordnet sind,
und/oder dass
die Ausnehmung sacklochartig ausgeführt ist, insbesondere wobei das Ausgleichselement (1) topfartig ausgeführt ist, so dass der Topfboden als Rückwand (40) einstückig mit der Topfwandung ausgeformt ist,
und/oder dass
die Ausnehmung an ihrem ersten axialen Endbereich offen und an ihrem anderen axialen Endbereich von einer am Ausgleichselement (1) ausgeformten Rückwand (40), insbesondere Stirnfläche, begrenzt ist.

9. Antrieb nach mindestens einem der vorangegangenen Ansprüche,
**dadurch gekennzeichnet, dass**
das Ausgleichselement (1) aus Kunststoff, nämlich NBR oder HNBR, ist.

10. Antrieb nach mindestens einem der vorangegangenen Ansprüche,
**dadurch gekennzeichnet, dass**
das Getriebe zumindest teilweise mit Schmierstoff, insbesondere Öl, befüllt ist.

11. Antrieb nach mindestens einem der vorangegangenen Ansprüche,
**dadurch gekennzeichnet, dass**
der Raumbereich des Motors zum Luftaustausch über eine semipermeable Membran mit der Umgebungsluft des Antriebs verbunden ist,
und/oder dass
das Ausgleichselement (1) kraftschlüssig verbunden, insbesondere eingepresst ist, in die das Ausgleichselement (1) aufnehmende Ausnehmung des zentralen Gehäuseteils,
und/oder dass
am Ausgleichselement (1) einstückig ausgebildete Dichtlippen (2) die Wandung der Ausnehmung des zentralen Gehäuseteils berühren, insbesondere und abdichten.

12. Verfahren zum Herstellen eines Antriebs nach mindestens einem der vorangegangenen Ansprüche,
wobei das Ausgleichselement (1) im Kunststoffspritzgussverfahren hergestellt wird, **dadurch gekennzeichnet, dass**
zum Entfernen des Werkzeugs beim Kunststoffspritzgießverfahren ein schraubverzahnter Werkzeugkern aus dem Ausgleichselement (1) herausgeschraubt wird,
insbesondere wobei beim Entfernen durch einen im Werkzeugkern angeordneten Kanal Druckluft zwischen Werkzeugkern und Ausgleichselement (1) eingeblasen wird.

## Claims

1. Drive having a central housing part,
wherein a compensation element (1) is arranged in a recess of the central housing part,
wherein the compensation element (1) has a recess,
wherein the recess of the central housing part is of pot-like design, wherein a passage (81) through the central housing part is arranged in the pot bottom,
wherein the drive has an electric motor and a gearing, wherein a bearing of an output shaft (3) and a bearing of a rotor shaft (20) are each received in the central housing part,
and wherein the compensation element (1) is arranged for pressure compensation between the spatial region of the gearing and the spatial region of the motor, wherein the inner wall of the recess of the compensation element (1) at least partly delimits the spatial region of the motor and the outer surface of the compensation element (1) at least partly delimits the spatial region of the gearing,
**characterised in that** a screw-like inner toothing region is formed in the recess of the compensation element (1),
wherein the compensation element (1), in particular elastically deformable compensation element (1), has a base body, with which a lid part (80) is integrally formed, wherein the lid part (80) can be pressed into and/or force-fittingly connected to a receiving region of the base body,
wherein at least one sealing lip is formed, in particular two sealing lips (2) are formed, at an axial end region of the base body,
wherein the lid part can be pressed into the axial end region, in particular at the inner wall there.

2. Drive according to claim 1,
**characterised in that**
a connecting web is arranged between lid part (80) and base body.

3. Drive according to at least one of the preceding claims,
**characterised in that**
the lid part (80) has a passage (81), in particular a centrally arranged passage (81).

4. Drive according to at least one of the preceding claims,
**characterised in that**
an opening, in particular an opening directed towards the surroundings, is closable by means of the lid part (80).

5. Drive according to at least one of the preceding claims,
**characterised in that**
the sealing lip has at its outer edge a bead or is designed with a strengthened wall, so that after pressing into the axial end region of the base body a stabilisation of the base body in this region, in particular in the region axially covered by the sealing lips (2), is achievable.

6. Drive according to at least one of the preceding claims,
**characterised in that**
the compensation element (1) is formed in one piece and/or is produced by the plastic injection moulding process.

7. Drive according to at least one of the preceding claims,
**characterised in that**
the screw-like inner toothing region is formed in an axial partial section of the base body, in particular with constant wall thickness.

8. Drive according to at least one of the preceding claims,
**characterised in that**
the compensation element (1) has a screw-like outer toothing region at its outer side,
and/or **in that**
the outer toothing is matched in such a way to the inner toothing and arranged in such away, in particular has the same screw axis and pitch, that the wall thickness of the compensation element (1) is substantially constant, in particular therefore varies by less than 50%,
and/or **in that**
the sealing lips (2) are arranged axially outside the toothing region and/or are arranged in the axially last screw toothing thread,
and/or **in that**
the recess is of blind-hole-like design, in particular wherein the compensation element (1) is of pot-like design, so that the pot bottom is formed as rear wall (40) integrally with the pot wall,
and/or **in that**
the recess is open at its first axial end region and delimited at its other axial end region by a rear wall (40), in particular end face, formed on the compensation element (1).

9. Drive according to at least one of the preceding claims, **characterised in that**
the compensation element (1) is made of plastic, namely NBR or HNBR.

10. Drive according to at least one of the preceding claims,
**characterised in that**
the gearing is filled at least partly with lubricant, in particular oil.

11. Drive according to at least one of the preceding claims,
**characterised in that**
the spatial region of the motor is connected to the ambient air of the drive for air exchange via a semipermeable membrane,
and/or **in that**
the compensation element (1) is force-fittingly connected to, in particular pressed into, the recess of the central housing part receiving the compensation element (1),
and/or **in that**
integrally formed sealing lips (2) on the compensation element (1) touch, in particular and seal, the wall of the recess of the central housing part.

12. Method for producing a drive according to at least one of the preceding claims,
wherein the compensation element (1) is produced by the plastic injection moulding process,
**characterised in that**
to remove the mould in the plastic injection moulding process, a screw-toothed mould core is unscrewed from the compensation element (1),
in particular wherein on the removal compressed air is blown in between mould core and compensation element (1) through a channel arranged in the mould core.

## Revendications

1. Entraînement comportant une partie centrale de boîtier,
un élément de compensation (1) étant disposé dans un évidement de la partie centrale de boîtier,
l'élément de compensation (1) présentant un évidement,
l'évidement de la partie centrale de boîtier étant réalisé en forme de pot, un passage (81) à travers la partie centrale de boîtier étant disposé dans le fond de pot,
l'entraînement présentant un moteur électrique et un réducteur, un palier d'un arbre de sortie (3) et un palier d'un arbre de rotor (20) étant logés dans la partie centrale de boîtier,
et l'élément de compensation (1) destiné à la compensation de pression étant disposé entre la zone spatiale du réducteur et la zone spatiale du moteur, la paroi intérieure de l'évidement de l'élément de compensation (1) limitant au moins partiellement la zone spatiale du moteur et la surface extérieure de l'élément de compensation (1) limitant au moins partiellement la zone spatiale du réducteur,
**caractérisé en ce qu'**une zone de denture intérieure hélicoïdale est formée dans l'évidement de l'élément de compensation (1), l'élément de compensation (1), en particulier un élément de compensation (1) déformable élastiquement, présentant un corps de base avec lequel une partie couvercle (80) est formée d'un seul tenant,
la partie couvercle (80) pouvant être pressée et/ou reliée par force dans une zone de réception du corps de base,
au moins une lèvre d'étanchéité, en particulier deux lèvres d'étanchéité (2), étant formée(s) sur une zone d'extrémité axiale du corps de base, et
la partie couvercle pouvant être pressée dans la zone d'extrémité axiale, en particulier sur la paroi intérieure correspondante.

2. Entraînement selon la revendication 1,
**caractérisé en ce que**
une nervure de liaison est disposée entre la partie couvercle (80) et le corps de base.

3. Entraînement selon au moins l'une des revendications précédentes,
**caractérisé en ce que**
la partie couvercle (80) présente un passage (81), en particulier un passage (81) disposé centralement.

4. Entraînement selon au moins l'une des revendications précédentes,
**caractérisé en ce que**
la partie couvercle (80) permet d'obturer une ouverture, en particulier une ouverture dirigée vers l'environnement.

5. Entraînement selon au moins l'une des revendications précédentes,
**caractérisé en ce que**
la lèvre d'étanchéité présente un bourrelet ou est réalisée avec une paroi renforcée sur son bord extérieur, de sorte qu'après insertion par pression dans la zone d'extrémité axiale du corps de base, une stabilisation du corps de base dans cette zone, en particulier dans la zone recouverte axialement par les lèvres d'étanchéité (2), peut être obtenue.

6. Entraînement selon au moins l'une des revendications précédentes,
**caractérisé en ce que**
l'élément de compensation (1) est formé d'un seul tenant et/ou fabriqué par un procédé de moulage par injection de matière plastique.

7. Entraînement selon au moins l'une des revendications précédentes,
**caractérisé en ce que**
la zone de denture intérieure hélicoïdale est formée dans une section partielle axiale du corps de base, en particulier avec une épaisseur de paroi constante.

8. Entraînement selon au moins l'une des revendications précédentes,
**caractérisé en ce que**
l'élément de compensation (1) présente une zone de denture extérieure hélicoïdale sur son côté extérieur,
et/ou que
la denture extérieure est adaptée à la denture intérieure, en particulier présente le même axe de vis et le même pas, et disposée sur celle-ci de façon que l'épaisseur de paroi de l'élément de compensation (1) soit sensiblement constante, en particulier varie de moins de 50 %, dans la zone de denture,
et/ou que
les lèvres d'étanchéité (2) sont disposées axialement à l'extérieur des zones de denture et/ou sont disposées dans le dernier pas de denture hélicoïdale axialement,
et/ou que
l'évidement est réalisé en forme de trou borgne, en particulier l'élément de compensation (1) étant réalisé en forme de pot, de sorte que le fond de pot formant une paroi arrière (40) soit formé d'un seul tenant avec la paroi de pot,
et/ou que
l'évidement est ouvert à sa première zone d'extrémité axiale et limité à son autre zone d'extrémité axiale par une paroi arrière (40), en particulier une surface frontale, formée sur l'élément de compensation (1).

9. Entraînement selon au moins l'une des revendications précédentes,
**caractérisé en ce que**
l'élément de compensation (1) est en matière plastique, à savoir en NBR ou HNBR.

10. Entraînement selon au moins l'une des revendications précédentes,
**caractérisé en ce que**
le réducteur est rempli au moins partiellement de lubrifiant, en particulier d'huile.

11. Entraînement selon au moins l'une des revendications précédentes,
**caractérisé en ce que**
la zone spatiale du moteur est reliée à l'air ambiant de l'entraînement par une membrane semi-perméable pour l'échange d'air,
et/ou que
l'élément de compensation (1) est relié par force, en particulier pressé, dans l'évidement de la partie centrale de boîtier qui reçoit l'élément de compensation (1),
et/ou que
des lèvres d'étanchéité (2) formées d'un seul tenant sur l'élément de compensation (1) touchent, en particulier rendent étanche, la paroi de l'évidement de la partie centrale de boîtier.

12. Procédé de fabrication d'un entraînement selon au moins l'une des revendications précédentes,
selon lequel l'élément de compensation (1) est fabriqué par un procédé de moulage par injection de matière plastique,
**caractérisé en ce que**
pour enlever le moule lors du procédé de moulage par injection de matière plastique, un noyau de moule à denture hélicoïdale est dévissé de l'élément de compensation (1),
en particulier de l'air comprimé étant insufflé entre le noyau de moule et l'élément de compensation (1) à travers un canal disposé dans le noyau de moule lors de l'enlèvement.
